(19) **Europäisches Patentamt**
**European Patent Office**
**Office européen des brevets**

(11) **EP 4 513 220 A1**

(12) **EUROPEAN PATENT APPLICATION**

(43) Date of publication:
**26.02.2025 Bulletin 2025/09**

(21) Application number: **24192557.7**

(22) Date of filing: **02.08.2024**

(51) International Patent Classification (IPC):
**G01S 5/02** *(2010.01)* **G01S 5/10** *(2006.01)*
**G01S 5/14** *(2006.01)*

(52) Cooperative Patent Classification (CPC):
**G01S 5/021; G01S 5/10; G01S 5/14**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.08.2023 FI 20235902**

(71) Applicant: **Nokia Solutions and Networks Oy
02610 Espoo (FI)**

(72) Inventors:
• **KUMAR, Dileep**
  **Espoo (FI)**
• **JOSHI, Satya Krishna**
  **Oulu (FI)**
• **HEKKALA, Aki**
  **Oulu (FI)**
• **SÄILY, Mikko**
  **Laukkoski (FI)**

(74) Representative: **Nokia EPO representatives
Nokia Technologies Oy
Karakaari 7
02610 Espoo (FI)**

(54) **DETERMINING THE POSITION OF A USER EQUIPMENT**

(57) The present subject matter relates to a method comprising determining a first estimate of a position of a user equipment comprised in a communication system; using the first estimate of the position of the user equipment for defining wavelengths of the groups of signals such that a virtual number of wavelengths that represents each group of signals can be obtained from the defined wavelengths of the group of signals; controlling the communication system for performing carrier phase measurements using the defined groups of signals; determining a second estimate of the position of the user equipment using the carrier phase measurements and the virtual numbers of wavelengths that represent the groups of signals; providing the second estimate of the position of the user equipment.

801 Coarse estimate on UE position
Via initial/available/acquired physical layer measurements

803 Configure and activate the *required* parameters, i.e., carrier frequencies $\{f_i^1, f_i^2\}_{\forall i=1,2...,B}$ for phase measurement

805 Obtain the carrier phase measurements at gNB(s)

807 Estimate target UE position

809 Desired integrity or accuracy ? — No

Yes

end

Fig. 8

EP 4 513 220 A1

**Description**

Technical Field

Various example embodiments relate to telecommunication systems, and more particularly to determining the position of a user equipment.

Background

The fifth-generation wireless networks (5G) refer to a new generation of radio systems and network architecture. 5G is expected to provide higher bitrates and coverage than the current long-term evolution (LTE) systems. 5G is also expected to increase network expandability up to hundreds of thousands of connections. However, the support for new use cases, such as Extended Reality (XR) and several mission-critical applications, increases the requirements for improved performance. Some aspects of carrier phase measurements have been described in reports, such as, R1-2211312, R1-1901980 and/or the like.

Summary

Example embodiments provide an apparatus for a communication system, the communication system comprising nodes and at least one user equipment, the communication system being configured for performing carrier phase measurements of groups of signals transmitted between the nodes and the user equipment, the communication system being configured to perform the carrier phase measurement of the group of positioning signals as a carrier phase measurement of a single virtual positioning signal representing the group of positioning signals, the virtual positioning signal having a virtual wavelength a virtual number of wavelengths, the apparatus comprising means, the means being configured for: determining a first estimate of a position of the user equipment; using the first estimate of the position of the user equipment for defining wavelengths of the groups of signals such that a virtual number of wavelengths that represents each group of signals can be obtained from the defined wavelengths of the group of signals; controlling the communication system for performing carrier phase measurements using the defined groups of signals; determining a second estimate of the position of the user equipment using the carrier phase measurements and the virtual numbers of wavelengths that represent the groups of signals; providing the second estimate of the position of the user equipment.

Example embodiments provide a method for a communication system, the communication system comprising nodes and at least one user equipment, the communication system being configured for performing carrier phase measurements of groups of signals transmitted between the nodes and the user equipment, the communication system being configured to perform the carrier phase measurement of the group of positioning signals as a carrier phase measurement of a single virtual positioning signal representing the group of positioning signals, the virtual positioning signal having a virtual wavelength a virtual number of wavelengths, the apparatus comprising means, the method comprising: determining a first estimate of a position of the user equipment; using the first estimate of the position of the user equipment for defining wavelengths of the groups of signals such that a virtual number of wavelengths that represents each group of signals can be obtained from the defined wavelengths of the group of signals; controlling the communication system for performing carrier phase measurements using the defined groups of signals; determining a second estimate of the position of the user equipment using the carrier phase measurements and the virtual numbers of wavelengths that represent the groups of signals; providing the second estimate of the position of the user equipment.

Example embodiments provide a computer program comprising instructions for causing an apparatus for performing at least the following: determining a first estimate of a position of a user equipment comprised in a communication system, the communication system comprising nodes and at least one user equipment, the communication system being configured for performing carrier phase measurements of groups of signals transmitted between the nodes and the user equipment, the communication system being configured to perform the carrier phase measurement of the group of positioning signals as a carrier phase measurement of a single virtual positioning signal representing the group of positioning signals, the virtual positioning signal having a virtual wavelength a virtual number of wavelengths, the apparatus comprising means; using the first estimate of the position of the user equipment for defining wavelengths of the groups of signals such that a virtual number of wavelengths that represents each group of signals can be obtained from the defined wavelengths of the group of signals; controlling the communication system for performing carrier phase measurements using the defined groups of signals; determining a second estimate of the position of the user equipment using the carrier phase measurements and the virtual numbers of wavelengths that represent the groups of signals; providing the second estimate of the position of the user equipment.

Brief Description of the Drawings

The accompanying figures are included to provide a further understanding of examples, and are incorporated in and constitute part of this specification. In the figures:

FIG.1 illustrates a part of an exemplifying radio access network;

FIG. 2 is a schematic illustration of a wireless communication system;

FIG. 3 is a flowchart of a method for determining the position of a user equipment according to an example of the present subject matter;

FIG. 4 is a flowchart of a method for determining the position of a user equipment according to an example of the present subject matter;

FIG. 5A is a flowchart of a method for determining accuracy of the position of a user equipment according to an example of the present subject matter;

FIG. 5B is a schematic illustration of a selected wireless communication system;

FIG. 6 is a flowchart of a method for determining accuracy of the position of a user equipment according to an example of the present subject matter;

FIG. 7 is a flowchart of a method for determining accuracy of the position of a user equipment according to an example of the present subject matter;

FIG. 8 is a flowchart of a method for determining the position of a user equipment according to an example of the present subject matter;

FIG. 9 is a signaling diagram of a method for determining the position of a user equipment according to an example of the present subject matter;

FIG. 10 is a diagram of a communication system in accordance with an example of the present subject matter;

FIG. 11 is a block diagram showing an example of an apparatus according to an example of the present subject matter.

Detailed Description

In the following description, for purposes of explanation and not limitation, specific details are set forth such as particular architectures, interfaces, techniques, etc., in order to provide a thorough understanding of the examples. However, it will be apparent to those skilled in the art that the disclosed subject matter may be practiced in other illustrative examples that depart from these specific details. In some instances, detailed descriptions of well-known devices and/or methods are omitted so as not to obscure the description with unnecessary detail.

The communication system may be a wireless communication system. Each node of the communication system may, for example, serve user equipments (UEs) located within the node's geographical area of service or a cell. The communication system may support one or more radio access technologies (RATs). A radio access technology of the radio access technologies may, for example, be evolved universal terrestrial radio access (E-UTRA) or 5G new radio (NR), but it is not limited to, as a person skilled in the art may apply the present subject matter to other communication systems provided with necessary properties.

The communication system according to the present subject matter may comprise two or more nodes and at least one user equipment. The communication system is said to comprise entities, wherein the entities are the nodes and the at least one user equipment respectively. The communication system may be configured according to the present subject matter to estimate or determine the position of a user equipment of the at least one user equipment. The user equipment whose position is estimated may be referred to as first user equipment. The user equipment may be a subscriber terminal, a smartphone, a mobile station, a mobile phone, a headset, a portable computer, a pad computer or another type of wireless mobile communication device operating with or without a subscriber identification module (SIM). Providing different types of user equipments may enable a flexible implementation of the present subject matter. The node may, for example, be a base station, e.g., a Node B, enhanced or evolved NodeB (eNB), a home eNode B (HeNB), gNB, an access point (AP), a femto node, a femto base station, a transmit receive point (TRP) or any other equipment belonging to the communication system and implementing a radio communication interface. Providing different types of nodes may enable a flexible implementation of the present subject matter.

The communication system may be provided with information, referred to as communication system information. The communication system information may for example comprise at least one of: the positions of the nodes of the communication system, history information of the at least one user equipment of the communication system, capabilities of the user equipments such as positioning capabilities and measurement capabilities, physical layer measurements or statistical information. The apparatus may be configured to receive or have access to the communication system information.

The communication system may be configured to provide signals which may be referred to herein as reference signals. The reference signal may be a signal that is transmitted from a sender entity of the communication system to a receiver entity of the communication system and enables carrier phase measurement at the receiver entity. The reference signal may, for example, be a predetermined signal having a specific waveform, which is transmitted from the sender entity to the receiver entity. The present subject matter may advantageously use the reference signals to determine the position of the first user equipment.

The position of the first user equipment may include at least one of: a location of the first user equipment, an orientation of the first user equipment, an elevation of the first user equipment, a range of the first user equipment to a node. In one example, the position of the first user equipment may be the location of the first user equipment, wherein the location may be a two-dimensional (2D) location or 3D location. The location may be a relative or absolute location. The location may include geographic coordinates. In one example, the position of the first user equipment may include an orientation of the first user equipment. In one example, the position of the first user equipment may include an elevation of the first user equipment. In one example, the position of the first user equipment may include a range of the first user equipment with respect to the node that sends or receives from the first user equipment the reference signals used to determine the position.

Each entity of at least part of the entities of the communication system may be configured to send a group of reference signals to a receiver entity of the communication system. The sender entity may be configured to send the group of reference signals at the same time to guarantee they have the same initial phase and the same over-the-air channel conditions. The present subject matter may enable a wider application of the present method by enabling different configurations of the communication system, wherein the configuration may indicate at least one of: nodes and user equipments that belong to the communication system, the number (and types) of groups of reference signals to be used in the communication in order to perform the carrier phase measurements, or the types of sender entities and receiver entities of the groups of reference signals. In one example, each node of the communication system may transmit a respective group of two or more reference signals to the first user equipment. In another example, each node of a subset of the nodes of the communication system may transmit a respective group of two or more reference signals to the first user equipment and the first user equipment may transmit one or more groups of two or more reference signals to respective one or more nodes of the communication system.

The received reference signal may have characteristics such as the carrier phase and the number of integer multiples of the carrier wavelength or the so-called integer ambiguity. The number of integer multiples of the carrier wavelength of the reference signal may be referred to herein as the number of wavelengths of the reference signal. The number of wavelengths of the reference signal may refer to the number of integer carrier cycles that occur during the reference signal propagation from the sender entity to the receiver entity. These characteristics may enable to obtain distances between the sender entities and receiver entities of the reference signals. The technique of carrier phase measurement may enable to obtain the carrier phase of the reference signal.

The groups of reference signals which are provided by the communication system may be used to estimate the position of the first user equipment using the carrier phase measurement. The communication system is configured for performing the carrier phase measurements by at least configuring each receiver entity in the communication system to perform the carrier phase measurement of each group reference signals which are received by the receiver entity. The receiver entity may be configured to perform the carrier phase measurement of each received group of reference signals as a carrier phase measurement of a single virtual positioning signal representing the group of reference signals, wherein the virtual positioning signal has a virtual wavelength and has a virtual number of wavelengths. This may be referred to as virtual based processing of the group of reference signals.

To describe this virtual based processing, a simplified but not limiting example is provided as follows. For example, a group of two reference signals may be transmitted with different carrier frequencies such as $f_i^1$ and $f_i^2$. The wavelengths of the two reference signals may be represented by $\lambda_i^1$ and $\lambda_i^2$ respectively. The receiver entity may perform the carrier phase measurements of the two reference signals. The receiver entity may measure the carrier phase of each reference signal. The measurement of carrier phase may be performed by, for example, obtaining the phase of the reference signal using a Phase Locked Loop (PLL). The measured carrier phases of the group of two reference signals may, for example, be modelled by the following two equations respectively:

$$\lambda_i^1 \varphi_{ik}^1 = d_{ik} + c\,(\delta_k - \delta_i) - \lambda_i^1\, N_{ik}^1 \quad \text{(Eq1) and}$$

$$\lambda_i^2 \varphi_{ik}^2 = d_{ik} + c\,(\delta_k - \delta_i) - \lambda_i^2\, N_{ik}^2 \quad \text{(Eq2)},$$

, where $\varphi_{ik}^1$ and $\varphi_{ik}^2$ refer the carrier phases for carrier frequency $f_i^1$ and $f_i^2$, respectively. $N_{ik}^1$ and $N_{ik}^2$, respectively, represent the number of wavelengths of the carrier phase measurement from carrier $f_i^1$ and $f_i^2$. The multiplication of the first and the second carrier phase measurements Eq1 and Eq2 by the factors $\dfrac{\lambda_i^2}{\lambda_i^2 - \lambda_i^1}$ and $\dfrac{\lambda_i^1}{\lambda_i^2 - \lambda_i^1}$ respectively, followed by a subtraction of the second from the first equation, may lead to the following equation:

$$\lambda_i^L \varphi_{ik}^L = d_{ik} + c\,(\delta_k - \delta_i) - \lambda_i^L\, N_{ik} \quad \text{(Eq3)},$$

, where $\lambda_i^L = \dfrac{\lambda_i^1 \lambda_i^2}{\lambda_i^2 - \lambda_i^1}$. The resulting equation (Eq3) may represent a virtual phase measurement of a virtual reference signal as it has the same form as each of the two (real) individual phase measurements Eq1 and Eq2, where $\lambda_i^L$ may be the virtual wavelength of the virtual reference signal, $\varphi_{ik}^L$ is the virtual carrier phase and $N_{ik}$ is the virtual number of wavelengths, where subscript "i" refers to the sender entity that sent the group of reference signals (with $f_i^1$ and $f_i^2$) and subscript "k" refers to the receiver entity that received the group of reference signals.

The present subject matter may enable a resource saving and reliable approach to determine the position of the first user equipment by making use of the virtual based processing. In particular, a quick and reliable search for unknown integer ambiguity and measurement integrity may be achieved. For that, a first estimate of the position of the first user equipment may be determined. The first estimate of the position of the first user equipment may, for example, be a rough estimate e.g., the position accuracy requirement may not be very high for the first estimate, and the accuracy of the first estimate of the position may be allowed to be worse than a threshold accuracy. In addition, a definition step and a control step may be performed.

In the definition step, carrier frequencies of groups of reference signals may be defined using the first estimate of the position of the first user equipment such that the virtual number of wavelengths associated with the groups of reference signals may be known in advance. For example, the virtual number of wavelengths of each group of reference signals may be obtained from the wavelengths defined for the each group of reference signals. In one example, the communication system information may be used by the definition step. For example, the total number of completed phase cycles that the reference carrier signal has travelled between the first user equipment and the node may be determined by exploiting the first estimate of the position of the first user equipment together with the fixed and known positions of the node(s). In addition, for each group of reference signals, the pair of sender entity and receiver entity for sending and receiving said group of reference signals respectively may be defined. The apparatus may, for example, use the first estimated position, the communication system information, together with the fixed and known position(s) of the sender entities to determine required frequencies for carrier phase measurements such that it leads to known virtual integer ambiguity corresponding to each defined sender entity.

In the control step, the communication system may be controlled such that the defined groups of reference signals are transmitted by the defined sender entities and the virtual carrier phase of each group of reference signals may be determined by carrier phase measurements of the individual reference signals of the group. For example, the apparatus may send control signals to the defined sender entities for transmitting the respective groups of reference signals. The communication system is controlled for performing the carrier phase measurements by controlling each defined receiver entity to perform the virtual based processing of each received group of reference signals.

Using the known virtual numbers of wavelengths associated with the defined groups of reference signals respectively and the determined virtual carrier phases, a second estimate of the position of the first user equipment may be determined. The second estimate of the position of the first user equipment may thus be provided as a refinement of the first estimate of the position of the first user equipment e.g., due to high accuracy of carrier phase measurements.

Thus, the communication system may enable to obtain an improved estimation of the position of the first user equipment by specifically choosing the carrier frequencies of the groups of reference signals.

In one example implementation of the definition step, the definition step may be performed by the apparatus. In one example implementation of the definition step, the definition step may be performed by the apparatus using entities of the communication system. For example, carrier frequencies of groups of reference signals may be defined using the first estimate of the position of the first user equipment such that the virtual number of wavelengths associated with the groups of reference signals may be defined as follows: one sender entity of the defined sender entities may be selected e.g., the selected sender entity may be a node that serves the first user equipment which is the receiver entity associated with the selected sender entity. The virtual number of wavelengths of the selected sender entity may be referred to as $N_{1,k}$. The virtual number of wavelengths associated with the groups of reference signals of the non-selected sender entities of the communication system may be defined as follows $N_{j,k} = \alpha_j N_{1,k}$ where $\alpha j \in R^+, \forall j = 2...,B,$ where $B$ may be the number of sender entities. Alternatively, the virtual number of wavelengths associated with the groups of reference signals of the non-selected sender entities of the communication system may be the virtual number of wavelengths of the selected sender entity i.e., $N_{j,k} = N_{1,k}$. In one example implementation of the definition step, the carrier frequencies of the groups of reference signals may be defined using the first estimate of the position of the first user equipment such that the virtual number of wavelengths associated with the groups of reference signals have respective predefined/known values e.g., $N_{1,k} = 3$, $N_{2,k} = 4$, $N_{3,k} = 5$, and so on.

The present subject matter may further improve the estimated positions by using an iterative approach. This may enable to include positioning integrity in carrier phase measurement and to obtain the desired accuracy by exploiting known geometric dependencies. For that, in one example, an accuracy of the second estimate of the position of the first user equipment may be determined. In response to determining that the accuracy does not fulfil a position criterion, the definition step and the control step may be repeated in order to determine again the second estimate position of the first user equipment. In each repetition, the definition step may use different carrier frequencies for the groups of the reference signals. The repetition may be performed until the accuracy fulfills the position criterion. The position criterion may, for example, require that the accuracy is smaller than a threshold.

For example, in each repetition, the apparatus may refine the frequencies of the groups of reference signals such that new virtual wavelength is increased compared to the virtual wavelengths of the previous repetitions. As an example, by increasing the virtual frequency, the number of integer part of the carrier phase increases. This may enable minimize the miss-match in subsequent measurement interval, e.g., in particular if the first user equipment is stationary.

In another example, in each repetition, the apparatus may refine the frequencies of the groups of reference signals may refine the frequencies and bandwidth such that it leads to minimum non-linear impairment due to hardware circuitry.

The present subject matter may provide advantageous techniques for estimating the accuracy of the second estimate of the position of the first user equipment.

As described above, the second estimate of the position of the first user equipment may be obtained using computed distances between the first user equipment and the nodes. In one example, the nodes may be the senders of the groups of reference signals. In this case, the accuracy estimation of the second estimate of the position of the first user equipment may be determined by: selecting two nodes of the communication system and estimating the distance between the first user equipment and a first node of the two selected nodes using a computed distance between the user equipment and the second node. The estimated distance may be compared with the computed distance between the first user equipment and the first node. For example, the accuracy may be the absolute value of the difference or the ratio between estimated distance and the computed distance between the first user equipment and the first node.

In one example, the accuracy of the second estimate of the position of the first user equipment may be determined by: using the defined reference signals for determining a third estimate of the position of the first user equipment using a technique different from the carrier phase measurements; and comparing the second estimate with the third estimate. For example, the accuracy may be the absolute value of the difference or the ratio between the second estimate and the third estimate.

In one example, the accuracy of the second estimate of the position of the first user equipment may be determined by: comparing the second estimate of the position with a third estimate of the position of the user equipment which is estimated from history data of the user equipment, the history data comprising previous measurement instances and mobility profile of the user equipment. For example, the accuracy may be the absolute value of the difference or the ratio between the second estimate and the third estimate.

In one example, the first estimate of the position of the first user equipment may be obtained using a method different from the carrier phase measurement technique. This may prevent bias in the position determination in case the first and second estimates use the same technique. For example, the first estimate of the position of the first user equipment may be performed using pseudorange measurement. In one example, the first estimate of the position of the first user equipment may be performed using the physical layer measurements (e.g., at least one of: Reference Signal Received Power (RSRP), Channel State Information Reference Signal (CSI-RS), time, angle or carrier phase) and/or statistical information (e.g., from the previous time slots).

The present subject matter may be used for different configurations of the communication system. In one configuration example, the communication system may comprise three nodes and the first user equipment, wherein each node of the nodes is configured to send a respective group of reference signals to the first user equipment.

In one configuration example, the communication system may comprise three nodes, the first user equipment and a positioning reference unit (PRU), wherein each node of the nodes is configured to send a respective group of reference signals to the first user equipment and to the PRU. The PRU has a fixed known position. The PRU may, for example, be a user equipment.

In one configuration example, the communication system may be provided in accordance with a PRU-assisted setup, where two base stations and one PRU implement double differential CPP. This may enable to implement the present method to both bi-directional CPP and double differential CPP.

In one example, the reference signal may be a positioning reference signal (PRS) or a sounding reference signal (SRS).

In one example, the apparatus may be a core network element. The core network element may, for example, be location management function (LMF). This may enable a centralized control of the estimation of the position of the first user equipment. In another example, the apparatus may be a Location Management Component (LMC).

In another example, the apparatus may be a node of the nodes of the communication system. For example, the apparatus may be the node that serves the first user equipment.

The present subject matter may comprise the following examples.

Example 1: An apparatus for a communication system, the communication system comprising nodes and at least one user equipment, the communication system being configured for performing carrier phase measurements of groups of signals transmitted between the nodes and the user equipment, the communication system being configured to perform the carrier phase measurement of the group of positioning signals as a carrier phase measurement of a single virtual positioning signal representing the group of positioning signals, the virtual positioning signal having a virtual wavelength a virtual number of wavelengths, the apparatus comprising: at least one processor; and at least one memory storing instructions that, when executed by the at least one processor, cause the apparatus at least to perform: determining a first estimate of a position of the user equipment; using the first estimate of the position of the user equipment for defining wavelengths of the groups of signals such that a virtual number of wavelengths that represents each group of signals can be obtained from the defined wavelengths of the group of signals; controlling the communication system for performing carrier phase measurements using the defined groups of signals; determining a second estimate of the position of the user equipment using the carrier phase measurements and the virtual numbers of wavelengths that represent the groups of signals; providing the second estimate of the position of the user equipment.

Example 2: A non-transitory computer readable medium comprising program instructions that, when executed by an apparatus, cause the apparatus to perform at least the following: determining a first estimate of a position of a user equipment comprised in a communication system, the communication system comprising nodes and at least one user equipment, the communication system being configured for performing carrier phase measurements of groups of signals transmitted between the nodes and the user equipment, the communication system being configured to perform the carrier phase measurement of the group of positioning signals as a carrier phase measurement of a single virtual positioning signal representing the group of positioning signals, the virtual positioning signal having a virtual wavelength a virtual number of wavelengths, the apparatus comprising means; using the first estimate of the position of the user equipment for defining wavelengths of the groups of signals such that a virtual number of wavelengths that represents each group of signals can be obtained from the defined wavelengths of the group of signals; controlling the communication system for performing carrier phase measurements using the defined groups of signals; determining a second estimate of the position of the user equipment using the carrier phase measurements and the virtual numbers of wavelengths that represent the groups of signals; providing the second estimate of the position of the user equipment.

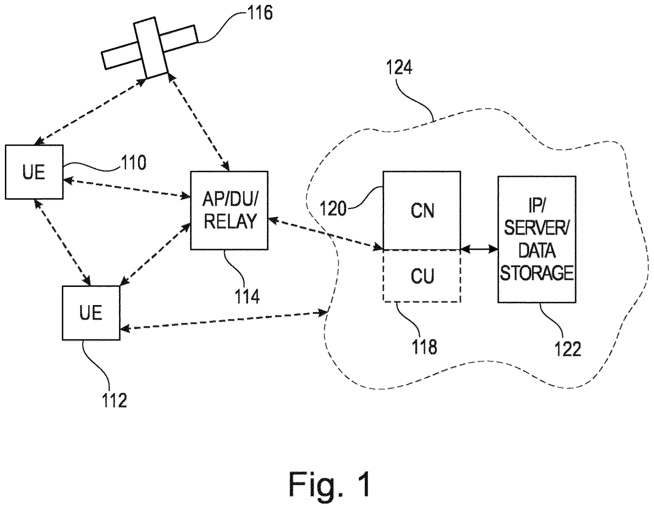

**FIG. 1** depicts examples of simplified system architectures only showing some elements and functional entities, all being logical units, whose implementation may differ from what is shown. The connections shown in FIG.1 are logical connections; the actual physical connections may be different. It is apparent to a person skilled in the art that the system typically comprises also other functions and structures than those shown in FIG.1.

The embodiments are not, however, restricted to the system given as an example but a person skilled in the art may apply the solution to other communication systems provided with necessary properties.

The example of FIG.1 shows a part of an exemplifying radio access network.

FIG. 1 shows devices 110 and 112. The devices 110 and 112 may, for example, be user devices. The devices 110 and 112 are configured to be in a wireless connection on one or more communication channels with a node 114. The node 114 is further connected to a core network 120. In one example, the node 114 may be an access node (such as (e/g)NodeB) 114 providing or serving devices in a cell. In one example, the node 114 may be a non-3GPP access node. The physical link from a device to a (e/g)NodeB is called uplink or reverse link and the physical link from the (e/g)NodeB to the device is called downlink or forward link. It should be appreciated that (e/g)NodeBs or their functionalities may be implemented by using any node, host, server or access point etc. entity suitable for such a usage.

A communications system typically comprises more than one (e/g)NodeB in which case the (e/g)NodeBs may also be configured to communicate with one another over links, wired or wireless, designed for the purpose. These links may be used for signaling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to devices. The antenna unit may comprise a plurality of antennas or antenna elements. The (e/g)NodeB is further connected to the core network 20 (CN or next generation core NGC). For example, the (e/g)NodeB may connect to an access and mobility management function (AMF) and user plane function (UPF) in the control plane and user plane, respectively. Depending on the system, the counterpart on the CN side can be a serving gateway (S-GW, routing and forwarding user data packets), packet data network gateway (P-GW), for providing connectivity of devices (UEs) to external packet data networks, or mobile management entity (MME), etc.

The device (also called user device, UE, user equipment, user terminal, terminal device, etc.) illustrates one type of an apparatus to which resources on the air interface are allocated and assigned, and thus any feature described herein with a device may be implemented with a corresponding apparatus, such as a relay node. An example of such a relay node is a layer 3 relay (self-backhauling relay) towards the base station.

The device typically refers to a device (e.g. a portable or non-portable computing device) that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a device may also be a nearly exclusive uplink only device, of which an example is a camera or video camera loading images or video clips to a network. A device may also be a device having capability to operate in Internet of Things (IoT) network which is a scenario in which objects are provided with the ability to transfer data over a network without requiring human-to-human or human-to-computer interaction, e.g., to be used in smart power grids and connected vehicles. The device may also utilize cloud. In some applications, a device may comprise a user portable device with radio parts (such as a watch, earphones or eyeglasses) and the computation is carried out in the cloud. The device (or in some embodiments a layer 3 relay node) is configured to perform one or more of user equipment functionalities. The device may also be called a subscriber unit, mobile station, remote terminal, access terminal, user terminal or user equipment (UE) just to mention but a few names or apparatuses.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in FIG. 1) may be implemented.

5G enables using multiple input - multiple output (MIMO) antennas, many more base stations or nodes than an existing LTE system (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, namely below 6GHz, cmWave and mmWave, and also being integrable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet as illustrated by the component referenced by reference numeral 122, or utilize services provided by them. The communication network may also be able to support the usage of cloud services, for example at least part of core network operations may be carried out as a cloud service (this is depicted in FIG.1 by "cloud" 124). The communication system may also comprise a central control entity, or a like, providing facilities for networks of different operators to cooperate for example in spectrum sharing.

The technology of Edge cloud may be brought into a radio access network (RAN) by utilizing network function virtualization (NVF) and software defined networking (SDN). Using the technology of edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side (in a distributed unit, DU 114) and non-real time functions being carried out in a centralized manner (in a centralized unit, CU 118).

It should also be understood that the distribution of labour between core network operations and base station operations may differ from that of the LTE or even be non-existent. Some other technology advancements probably to be used are Big Data and all-IP, which may change the way networks are being constructed and managed. 5G is being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). Each satellite 116 in the mega-constellation may cover several satellite-enabled network entities that create on-ground cells. The on-ground cells may be created via an on-ground relay node 114 or by a gNB located on-ground or in a satellite.

It is understandable for a person skilled in the art that the depicted system is only an example of a part of a radio access system and in practice, the system may comprise a plurality of (e/g)NodeBs, the device may have an access to a plurality of radio cells and the system may comprise also other apparatuses, such as physical layer relay nodes or other network elements, etc. One of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of FIG.1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)nodeBs), a home node B gateway, or HNB-GW (not shown in FIG.1). A HNB Gateway (HNB-GW), which is typically installed within an operator's network may aggregate traffic from a large number of HNBs back to a core network.

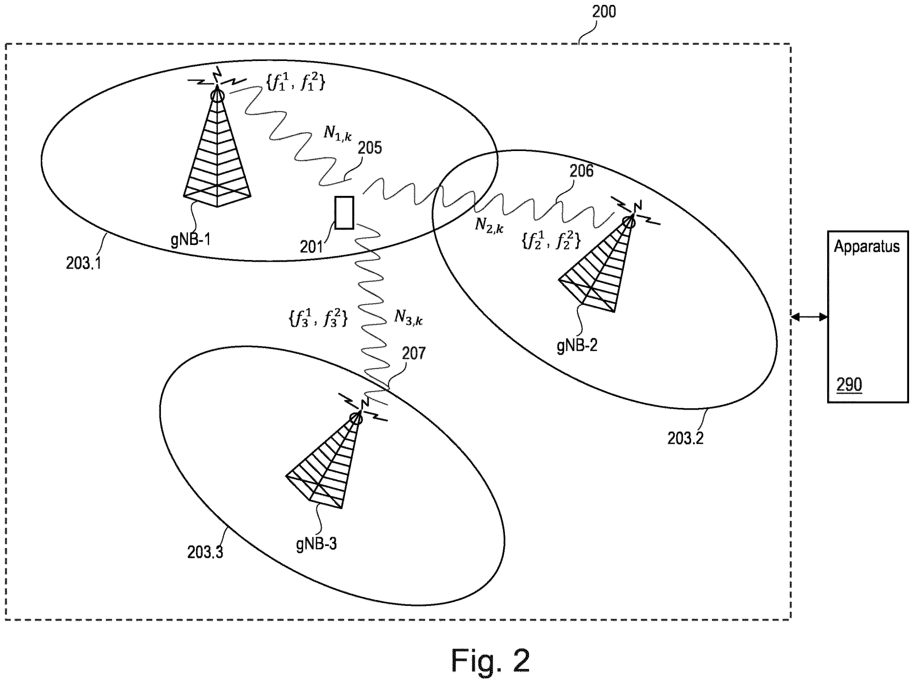

FIG. 2 is a schematic illustration of a wireless communication system 200 and an apparatus 290 in accordance with an example of the present subject matter. The communication system 200 may, for example, be configured to use a time division duplex (TDD) technique or Frequency Division Duplex (FDD) technique and operate in full or half-duplex modes for data transmission, or use other transmission techniques that enable communication of data between entities of the communication system 200.

For simplicity, communication system 200 is shown to include three base stations such as gNBs: gNB-1, gNB-2, and gNB-3 which may communicate with each other. Each gNB of the gNBs gNB-1, gNB-2, and gNB-3 may, for example, be the gNB described with reference to FIG. 1. That is, the communication system 200 may support a same RAT or different RATs.

Each gNB of the gNBs gNB-1 to gNB-3 may serve UEs within a respective geographical coverage area of service or cell 203.1-3. For simplicity, only one user equipment 201 which is served by the gNB gNB-1 is shown. The UE 201 may communicate with the gNB gNB-1 over a wireless interface e.g., a radio interface.

As shown, the UE 201 may, for example, receive a group of reference signals from each of the gNBs gNB-1 through gNB-3. In this example, the gNB gNB-1 may send a first group (referred to as $\{f_1^1, f_1^2\}$) of two reference signals, where $f_1^1$ and $f_1^2$ refer to the carrier frequencies of the first group of reference signals respectively, where subscript "1" refers to the gNB gNB-1. The gNB gNB-2 may send as second group (referred to as $\{f_2^1, f_2^2\}$) of two reference signals, where $f_2^1$ and $f_2^2$ refer to the carrier frequencies of the second group of reference signals respectively, where subscript "2" refers to the gNB gNB-2. The gNB gNB-3 may send a third group (referred to as $\{f_3^1, f_3^2\}$) of two reference signals, where $f_3^1$ and $f_3^2$ refer to the carrier frequencies of the third group of reference signals respectively, where subscript "3" refers to the gNB gNB-3. The terms "First," "Second," or "third" are used as labels for nouns that they precede, and do not imply any type of ordering (e.g., spatial, temporal, logical) unless explicitly defined as such.

The UE 201 may be configured to (e.g., automatically) perform carrier phase measurement of each received group of reference signals. The UE 201 may be configured to perform the virtual based processing of each received group of reference signals using the carrier phase measurement of the group of reference signals. For that, the UE 201 may be configured to perform the carrier phase measurement of each received group of reference signals as a carrier phase measurement of a single virtual reference signal representing the group of reference signals, wherein the virtual reference signal has a virtual wavelength and has a virtual number of wavelengths. This is indicated in FIG. 2 where only one signal is shown to be received at the UE 201. This signal may be virtual having the virtual number of wavelengths $N_{i,k}$, where subscript "k" refers to the UE 201 and "i" refers to the i-th gNB. For example, the virtual based processing of the first group of reference signals $\{f_1^1, f_1^2\}$ may enable to use a virtual reference signal 205 having the virtual number of wavelengths $N_{1,k}$. The virtual based processing of the second group of reference signals $\{f_2^1, f_2^2\}$ may enable to use a virtual reference signal 206 having the virtual number of wavelengths $N_{2,k}$. The virtual based processing of the third group of reference signals $\{f_3^1, f_3^2\}$ may enable to use a virtual reference signal 207 having the virtual number of wavelengths $N_{3,k}$.

The apparatus 290 may be configured to control operation of the communication system 200. The apparatus 290 may, for example, control or trigger the UE 201 and the gNBs gNB-1 through gNB-3 to operate as described above. The apparatus 290 may receive results of the carrier phase measurements performed by the communication system 200. The apparatus 290 may, for example, be a core network element such as a LMF.

Although shown as a separate component of the communication system 200, the apparatus 290 may be in another example part of the communication system 200 e.g., the apparatus 290 may be part of a gNB e.g., gNB-1, of the communication system 200.

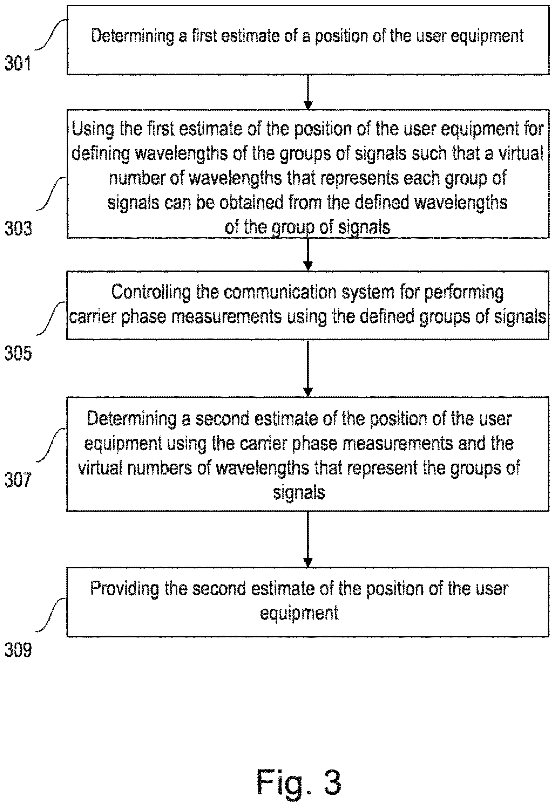

FIG. 3 is a flowchart of a method for determining the position of a user equipment according to an example of the present subject matter. For the purpose of explanation, the method described in FIG 3 may be implemented in the system illustrated in FIG. 2, but is not limited to this implementation. The method may, for example, be performed by the apparatus 290 for determining the position of the user equipment 201.

A first estimate of a position of the user equipment 201 may be performed in step 301. The first estimate of the position of the user equipment 201 may be used for defining in step 303 wavelengths of the groups of signals such that a virtual number of wavelengths that represents each group of signals can be obtained from the defined wavelengths of the group of signals. Step 303 may be referred to as the definition step. For each defined group of reference signals, the pair of sender entity and receiver entity for sending and receiving said group of reference signals respectively may be defined or determined or selected in the definition step. Following the example of FIG. 2, the frequencies of each group of the three groups of reference signals may be determined such that the virtual number $N_{1,k}$ may be derived or obtained from the frequencies $\{f_1^1, f_1^2\}$, the virtual number $N_{2,k}$ may be obtained from the frequencies $\{f_2^1, f_2^2\}$, and the virtual number $N_{3,k}$ may be obtained from the frequencies $\{f_3^1, f_3^2\}$

. The communication system may be controlled in step 305 for performing carrier phase measurements using the defined group of signals. This may result in the determination of the virtual carrier phases of the groups of reference signals. Step 305 may be referred to as the control step. The control of the communication system to perform carrier phase measurements may comprise the control of the defined receiver entities of the commination system to perform the carrier phase measurements of reference signals received by the receiver entities. Following the example of FIG. 2, the UE 201 may be configured to perform the carrier phase measurements of the three groups of reference signals in order to perform the virtual based processing. This may result in the determination of three virtual carrier phases of the three groups of reference signals.

In one example implementation of the control step, the apparatus may configure and activate specific resources of the defined sender entities (e.g., nodes) using shared and/or dedicated control channels, and request or ask the sender entities to use these resources. The apparatus may then trigger and request to initiate the carrier phase measurements on the network configured resources.

A second estimate of the position of the user equipment may be performed in step 307 using the carrier phase measurements and the virtual numbers of wavelengths that represent the groups of signals. Following the example of FIG. 2, the UE 201 may, for example, send to the apparatus 290 the three virtual carrier phases and other information regarding the groups of reference signals. The apparatus may use the three virtual carrier phases and the three known or predefined virtual numbers of wavelengths $N_{1,k}$, $N_{2,k}$ and $N_{3,k}$ in order to determine a position of the user equipment UE 201, wherein said position is the second estimate.

The second estimate of the position of the user equipment may be provided in step 309.

For example, the method of FIG. 3 may enable to transmit each group of signals having two or more carrier frequencies at the same time, from the same transmitter to the same receiver. They are both measured separately by the receiver. Thus, two different measurement results are achieved - technically. Their difference is computed. This is the fractional part of the virtual wavelength measurement. Now, when the frequencies are selected, in a predefined manner, the number of virtual wavelengths (vw) may be known. Also, the fractional part is known, meaning that everything known to calculate the distance. If there are more than two frequencies, a multitude of vw measurements may be performed, and a check if the values correspond to each other may be performed, and if not the average or a fine-tune the frequencies may be performed.

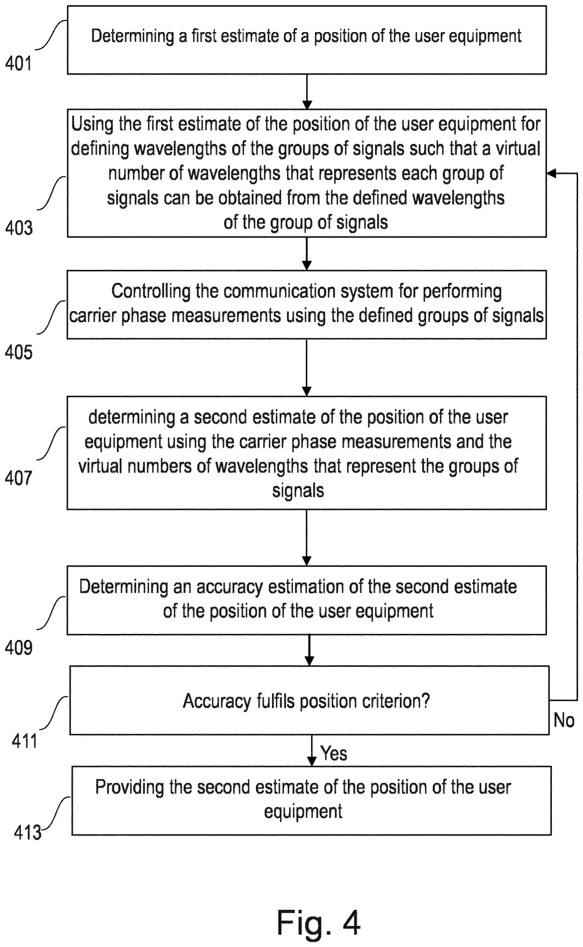

**FIG. 4** is a flowchart of a method for determining the position of a user equipment according to an example of the present subject matter. For the purpose of explanation, the method described in FIG 4 may be implemented in the system illustrated in FIG. 2, but is not limited to this implementation. The method may, for example, be performed by the apparatus 290 for determining the position of the user equipment 201.

A first estimate of a position of the user equipment 201 may be performed in step 401. The first estimate of the position of the user equipment 201 may be used for defining in step 403 wavelengths of the groups of signals such that a virtual number of wavelengths that represents each group of signals can be obtained from the defined wavelengths of the group of signals. Following the example of FIG. 2, the frequencies of each group of the three groups of reference signals may be determined such that the virtual number $N_{1,k}$ may be derived or obtained from the frequencies $\{f_1^1, f_1^2\}$, the virtual number $N_{2,k}$ may be obtained from the frequencies $\{f_2^1, f_2^2\}$, and the virtual number $N_{3,k}$ may be obtained from the frequencies $\{f_3^1, f_3^2\}$.

The communication system may be controlled in step 405 for performing carrier phase measurements using the defined group of signals. This may result in the determination of the virtual carrier phases of the groups of reference signals. Following the example of FIG. 2, the UE 201 may be configured to perform the carrier phase measurements of the three groups of reference signals in order to perform the virtual based processing. This may result in the determination of three virtual carrier phases of the three groups of reference signals.

A second estimate of the position of the user equipment may be performed in step 407 using the carrier phase measurements and the virtual numbers of wavelengths that represent the groups of signals. Following the example of FIG. 2, the UE 201 may, for example, send to the apparatus 290 the three virtual carrier phases and other information regarding the groups of reference signals. The apparatus may use the three virtual carrier phases and the three known or predefined virtual numbers of wavelengths $N_{1,k}$, $N_{2,k}$ and $N_{3,k}$ in order to determine a position of the user equipment UE 201, wherein said position is the second estimate.

An accuracy estimation of the second estimate of the position of the user equipment may be determined in step 409.

It may be determined in step 411, whether the second estimate fulfills the position criterion. If so, the second estimate of the position of the user equipment may be provided in step 413. Otherwise, the method goes back to step 403 in order to be repeated. In each repetition, different frequencies may be chosen for the group reference signals but with the same constraint that virtual number of wavelengths can be derived from the defined frequencies. Folling the example of FIG. 2, in each repetition different value of the frequencies $\{f_1^1, f_1^2\}, \{f_2^1, f_2^2\}$, and $\{f_3^1, f_3^2\}$ may be chosen so that the virtual numbers of wavelengths $N_{1,k}$, $N_{2,k}$ and $N_{3,k}$ may be obtained from the new defined pairs of frequencies

$\{f_1^1, f_1^2\}, \{f_2^1, f_2^2\}$ , and $\{f_3^1, f_3^2\}$ respectively.

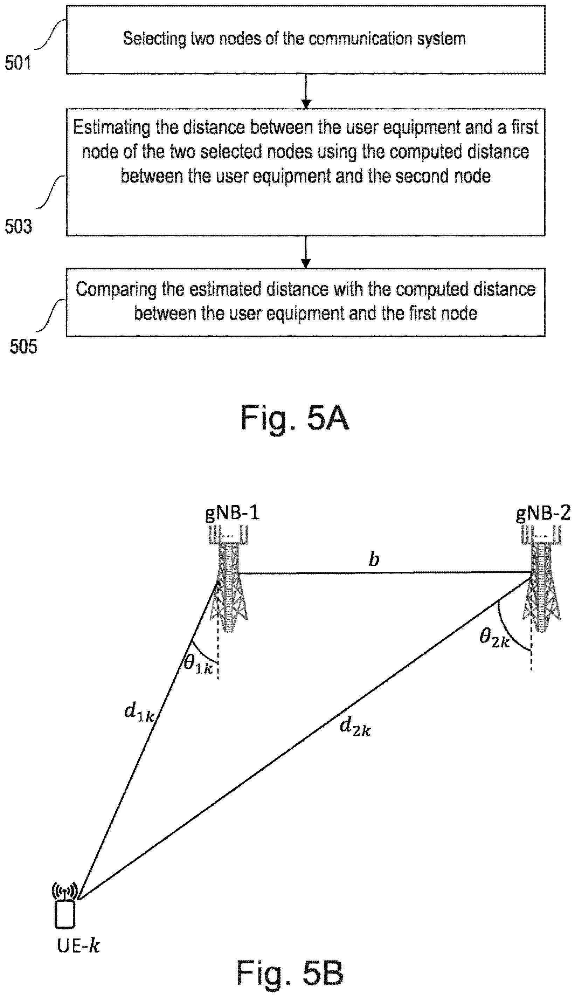

**FIG. 5A** is a flowchart of a method for determining accuracy of an estimated position of a user equipment according to an example of the present subject matter. For the purpose of explanation, the method described in FIG 5A may be implemented in the system illustrated in FIG. 2, but is not limited to this implementation. The method may, for example, be performed by the apparatus 290 for determining the accuracy of the second estimate of the position user equipment 201 e.g., which is provided in step 309 of the method of FIG. 3. The communication system used in the present example may comprise gNBs (e.g, gNB-1 and gNB-2 as shown in FIG. 5B) and the user equipment, wherein the sender entities of the groups of reference signals are the gNBs and the receiver entity is the UE.

Two nodes of the communication system may be selected in step 501. This is illustrated with the diagram of FIG. 5B which shows the two selected nodes and the user equipment.

The selected nodes may enable the positioning integrity via measurement diversity and exploiting the underlying geometric dependencies of spatially distributed gNBs and the UE. FIG. 5B may represent a case wherein the two selected gNBs transmit downlink (DL)-PRS simultaneously (e.g., without time/phase and NLoS errors for the simplifications), the phase observables equations for the two gNBs may be defined as follows: $\lambda_1^L(\varphi_{1k} + N_{1k}) = d_{1k}$ (2a) and $\lambda_2^L(\varphi_{2k} + N_{2k}) = d_{2k}$ (2b), where $d_{ik}$ is the computed geographical distance, and $\varphi_{ik}$, $N_{ik}$ respectively denotes the fractional part and integer part of the carrier phase. The underlying geometric dependencies of the spatially distributed gNBs and the UE are illustrated in FIG. 5B.

The distance between the user equipment and a first node of the two selected nodes may be estimated in step 503 using the computed distance between the user equipment and the second node. The distance may, for example, be estimated using the direction from the second node to the user equipment.

Following the diagram of FIG. 5B, and assuming that the integer ambiguity $\{N_{ik}\}$ corresponding to each gNB-$i$ is separately resolved and/or estimated using the present low complexity method on proactive configuration and activation with the required carrier frequencies e.g., as described in FIG. 3. To ensure the integrity of estimated positioning, the computed geographical distance $d_{ik}$ using carrier phase measurements in equations (2a, 2b) may be cross validated by exploiting the dispositions and placements of gNB-UE pair in FIG 5B, e.g., known fixed locations of gNBs, $b = \sqrt{(x_2 - x_1) + (y_2 - y_1)}$ being distance between the two gNBs, and underlying geometric dependencies via trigonometry. Specifically, using the side-angle-side (SAS) theorem, an estimate (of step 503) of geographical distance $\overline{d_{2k}}$ can be obtained as follows: $\overline{d_{2k}} = \sqrt{d_{1k}^2 + b^2 - 2d_{1k}b\cos(\theta_{1k} + 90^o)}$ .

The estimated distance $\overline{d_{2k}}$ may be compared in step 505 with the computed distance $\overline{d_{2k}}$ between the user equipment and the first node. Thus, the network node (e.g., LMF) may validate the integer unambiguity, e.g., by comparing estimated and computed values, and thus resulting into improved positioning integrity estimate. For example, the comparison may be performed by evaluating the difference between the computed and estimated distances, $|\overline{d_{2k}} - d_{2k}|$. This difference may provide the accuracy of the computed distance $d_{2k}$. In addition, the difference $|\overline{d_{2k}} - d_{2k}|$ may be compared against a threshold and/or tolerance parameter $\delta$, e.g., as follows: $|\overline{d_{2k}} - d_{2k}| < \delta$. The threshold and/or tolerance parameter $\delta$ may, for example, be determined by the network node based on, e.g., the radio propagation conditions and/or availability of LoS/NLoS path between gNB-UE pair.

If the difference $|\overline{d_{2k}} - d_{2k}|$ is smaller than the threshold $\delta$, this may indicate that the integrity is achieved, otherwise, it may indicate that there is a mismatch between the estimated and computed distances. In the case of miss-match between the estimated and computed distance above network defined threshold value, different refine methods may be used.

In one example, the LMF may iteratively refine parameters, e.g., the carrier frequencies $\{f_i^1, f_i^2\}_{\forall i=1,2...,B}$ for phase measurements, in subsequent measurement instances such that the desired integrity and/or accuracy can be achieved for the target UE.

In another example, if $\overline{d_{ik}} > d_{ik}$, the LMF may refine the frequencies $\{f_i^1, f_i^2\}$ such that new virtual wavelength $\lambda_i^{L(new)}$ is increased as follows: $\overline{d_{ik}} > d_{ik}$ may mean that $\overline{d_{ik}} > \lambda_i^L(\varphi_{ik} + N_{ik})$ (i.e., $\overline{d_{ik}} > \lambda_i^L\varphi_{ik} + \lambda_i^L N_{ik}$) and thus

$$\overline{d_{ik}} = \lambda_i^L \varphi_{ik} + \quad \lambda_i^L N_{ik} + \Delta \quad \text{and} \quad \lambda_i^{(new)} N_{ik}^{(new)} = \lambda_i^L \varphi_{ik} + \lambda_i^L N_{ik} + \Delta$$ , where the equality may be achieved via a design parameter $\Delta$ e.g., by tuning the carrier frequencies $\{f_i^1, f_i^2\}$ such that increasing the multiple $\{\lambda_i^{new} N_{ik}^{new}\}$. As an example, by increasing the virtual frequency, the number of integer part of the carrier phase increases. This may enable minimize the miss-match in subsequent measurement interval, assuming stationary UE, and vice-versa.

In another example, the LMF may refine the frequencies $\{f_i^1, f_i^2\}$ and bandwidth such that it leads to minimum non-linear impairment due to hardware circuitry.

In another example, the LMF may select a reference gNB with relatively higher probability of LoS path with the target UE, and then, determine the underlying geometric factors with respect to other gNB(s).

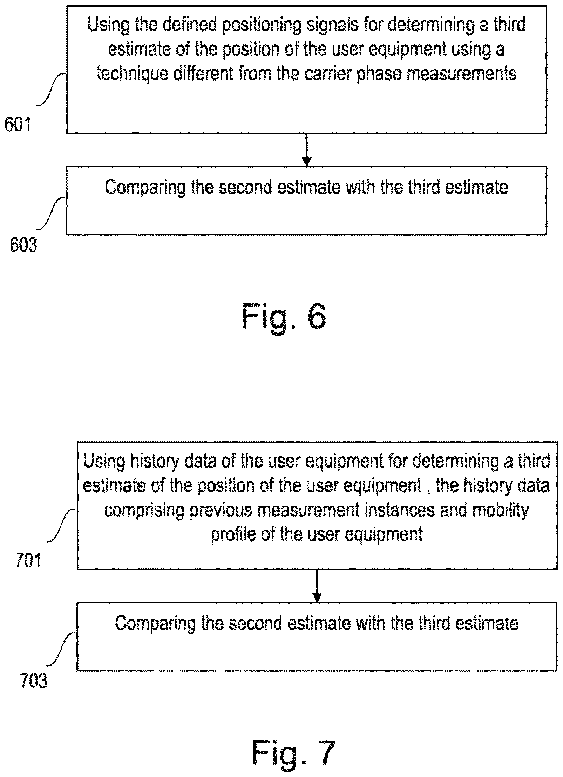

**FIG. 6** is a flowchart of a method for determining accuracy of an estimated position of a user equipment according to an example of the present subject matter. For the purpose of explanation, the method described in FIG 6 may be implemented in the system illustrated in FIG. 2, but is not limited to this implementation. The method may, for example, be performed by the apparatus 290 for determining the accuracy of the second estimate of the position user equipment 201 e.g., which is provided in step 309 of the method of FIG. 3.

In step 601, using the defined signals (e.g., defined in step 303 of FIG. 3) for determining a third estimate ($P_\theta$) of the position of the user equipment using a technique different from the carrier phase measurements. And the second estimate ($P_\varphi$) may be compared with the third estimate in step 603.

The methos of FIG. 6 may enable positioning integrity or accuracy via measurement redundancy. For example, the LMF may employ different positioning methods from same DL-PRS measurement, e.g., angle($\theta$)/time($\tau$)/phase($\varphi$), and compare corresponding independent estimates of UE location in step 601 for consistency, and then, accordingly adjust the parameters (e.g., carrier frequency) and measurement metric angle($\theta$)/time($\tau$)/phase($\varphi$), in the subsequent measurement instances such that the desired integrity and/or accuracy can be achieved for the UE. The third estimated position may be referred to as $P_\theta$ indicating that it was determined using angle measurements, while the second estimate of the position may be referred to as $P_\varphi$ indicating that it was determined using phase measurements.

For example, the comparison of step 603 may be performed by evaluating the difference between the third and second estimates, $|P_\theta - P_\varphi|$. This difference may provide the accuracy of the position $P_\varphi$ as estimated by the method of FIG. 3. In addition, the difference $|P_\theta - P_\varphi|$ may be compared against a threshold $\delta$, e.g., as follows: $|P_\theta - P_\varphi| < \delta$. The threshold and/or tolerance parameter $\delta$ may, for example, be determined by the network node based on, e.g., the radio propagation conditions and/or availability of LoS/NLoS path between gNB-UE pair.

If the difference $|P_\theta - P_\varphi|$ is smaller than the threshold $\delta$, this may indicate that the integrity is achieved, otherwise, it may indicate that there is a mismatch between the estimated positions. In the case of miss-match between the estimated positions is above the threshold, different refine methods may be used e.g., as described with reference to FIG. 5A.

**FIG. 7** is a flowchart of a method for determining accuracy of an estimated position of a user equipment according to an example of the present subject matter. For the purpose of explanation, the method described in FIG 7 may be implemented in the system illustrated in FIG. 2, but is not limited to this implementation. The method may, for example, be performed by the apparatus 290 for determining the accuracy of the second estimate of the position user equipment 201 e.g., which is provided in step 309 of the method of FIG. 3.

A third estimate of the position of the user equipment may be performed in step 701 using history data of the user equipment. The history data comprises previous measurement instances and mobility profile of the user equipment. And the second estimate may be compared with the third estimate in step 703. In case of miss-match between the estimated positions is above a threshold, different refine methods may be used e.g., as described with reference to FIG. 5A.

For example, the LMF may gather and store in step 701 all the information on the UE locations from the previous time slots, and then mapped into likelihood distribution, e.g., mixed Gaussian mixture models. In this case of FIG. 7, the integrity assessments may be based on information about the current estimated coordinates of target UE, and compares it to the available stored information of previous measurement instances and UE mobility profile. Specifically, the node (e.g., LMF, gNB(s), UE) may define a metric/threshold (e.g., relative deviation with respect to the mean of likelihood distribution) for measuring similarity between two or more (uncorrelated) temporal measurement instances, and accordingly, adjust the parameters in subsequent measurement instances such that the desired integrity and/or accuracy can be achieved for the target UE.

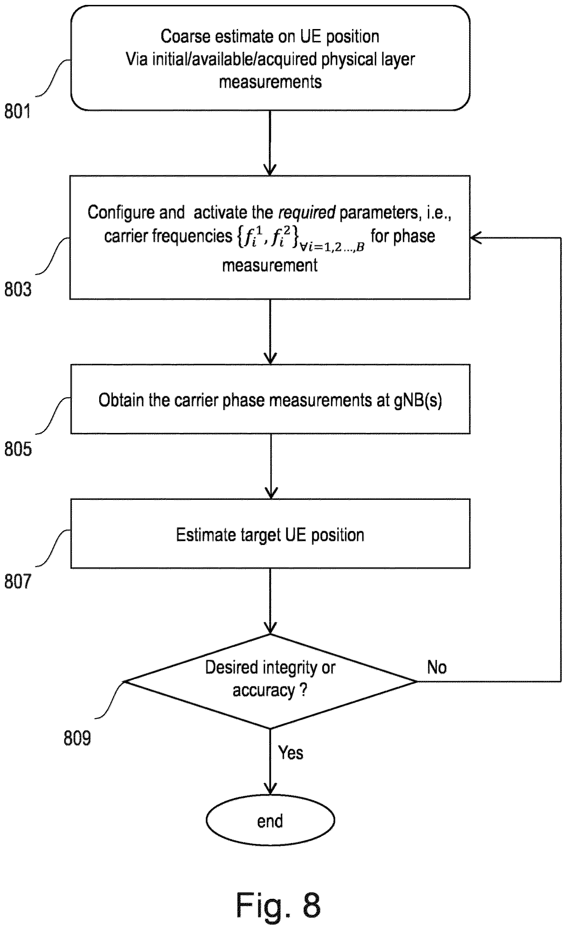

FIG. 8 is a flowchart of a method for determining the position of a user equipment according to an example of the present subject matter. For the purpose of explanation, the method described in FIG 8 may be implemented in the system illustrated in FIG. 2, but is not limited to this implementation. The method may, for example, be performed by the apparatus 290 for determining the position of the user equipment 201, wherein the apparatus 290 may be a network node.

The method of FIG. 8 may enable to reduce problem dimensions and associated computational complexity, which is mainly inherent from determining the unknown integer ambiguity corresponding to the gNB, e.g., via exhaustive searching all combination values of ambiguity. For that, the concept of virtual wavelength (e.g., as described in R1-2211312) may be used. Specifically, the method may further use an efficient and proactive selection of carrier frequencies at each gNB, corresponding positioning integrity and accuracy check by exploiting the underlying geometric dependencies to enable the quick and reliable search for integer ambiguity and ensure accuracy in phase measurements.

Using the initial and/or available and/or acquired physical layer measurements (e.g., RSRP, CSI-RS, time, angle, phase, etc.) and/or available and/or acquired statistical information (e.g., from the previous time slots), the network node (e.g., LMF) may first determine in step 801 the coarse location of target UE. By exploiting the estimated rough UE's position together with the fixed and known positions of gNB(s), the network node (e.g., LMF, gNB(s)) may proactively configure and activate in step 803 the gNB/TRP specific frequencies $\{f_i^1, f_i^2\}_{\forall i=1,2...,B}$ for carrier phase measurements such that it leads to known (virtual) integer ambiguity estimates across serving and neighbour/assisting gNB(s).

The network node may obtain in step 805 the carrier phase measurements which are performed suing signals at the specific frequencies. The network node may estimate the position of the UE in step 807. The network node may determine in step 809 whether the desired integrity or accuracy is achieved with determined UE position (from step 807). If so, the position of the UE may be provided; otherwise, the method may be repeated by going back to step 803 as indicated in FIG. 8. This process may be done iteratively to achieve the desired accuracy and/or integrity. For example, by exploiting the assisting information, e.g., known fixed location of serving and neighbour gNBs, initial, available or acquired measurements of time and/or angle and/or phase parameters, the network node (e.g., LMF) may proactively exploit the geometric dependencies to refine the parameters, e.g., carrier frequencies $\{f_i^1, f_i^2\}_{\forall i=1,2...,B}$, such that the desired positioning integrity and/or accuracy can be achieved, while ensuring the integer unambiguity, for each target UE.

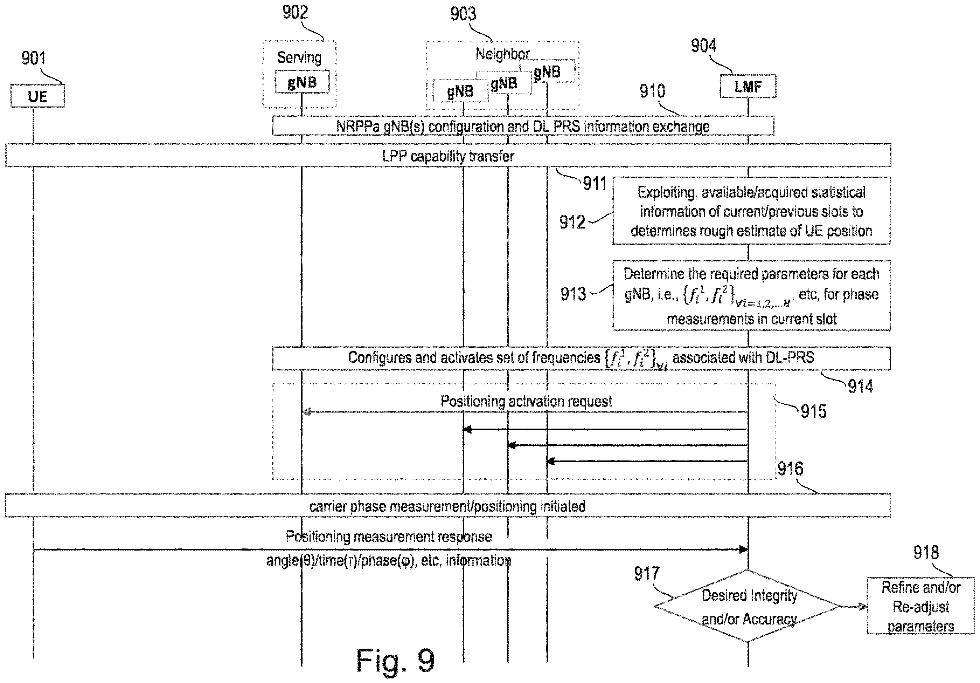

FIG. 9 depicts a signaling diagram of a network controlled method for determining a position of a user equipment in accordance with an example of the present subject matter. The method may use the carrier phase measurements in order to ensure that the (virtual) integer ambiguity associated with all gNBs takes the known values while ensuring the desired integrity and accuracy on the estimated position of the target UE.

The method may be performed in a communication system comprising a user equipment 901 which is served by a gNB 902. The communication system further comprises neighborings gNBs 903 of the serving gNB 902 and a LMF 904. The UE 901 may not be directly connected/communicating (i.e., synchronized) with the neighbour gNB(s) 903, and thus, assisting information, e.g., the rough position of UE, configured carrier frequencies at serving gNB's, etc, may be obtained via the network node (e.g., LMF or serving gNB).

The LMF 904 configures (910) DL PRS and obtains serving and neighbour/assisting gNB(s) 902 and 903 required for the positioning of the target UE 901. The network node (e.g., LMF, gNB(s)) inquires (911) positioning capabilities of the target UE 901 via the LTE Positioning Protocol (LPP) Capability Transfer procedures (e.g., as described in R1-2107057, R1-142343). In order to obtain accurate phase measurements while ensuring the desired positioning integrity, the information on, but are not limited to, e.g., antenna panels' phase center offsets, local oscillator and measurements capability may be obtained. The obtained information, via LPP Capability Transfer procedures, may then, be used by the network node (e.g., LMF, gNB(s)) for preempative positioning resource configurations for UE. As an example, the network node can *proactively adjust* the positioning resources and corresponding measurement bandwidth, etc, based on obtained the information on UE's supports of frequencies and phase measurements capabilities on channels for FR1 and FR2, etc, e.g., based on local oscillator stability/drift, and thus, improve the positioning integrity and accuracy by preventive configuration. An another example, with the periodic downlink PRS measurement, UE may estimate the different (virtual) phase offsets, which may be caused by local oscillator drift corresponding to carrier frequencies $\{f_i^1, f_i^2\}_{\forall i=1,2...,B}$, and the target UE may be asked/configured to report this drift along with estimated phase, and thus, improve the integrity and accuracy by post-measurement corrections.

The network node (e.g., LMF) may exploit (912) initial and/or available and/or acquired physical layer measurements and/or available and/or acquired statistical information (e.g., from the current and/or previous time slots), to determine the rough estimate of UE position, and stores the same for subsequent slots.

The network node (e.g., LMF) may exploit the estimated UE's position, obtained additional information in step 911, together with the gNB(s)'s fixed and known position(s) to determine (913) required frequencies $\{f_i^1, f_i^2\}_{\forall i=1,2...,B}$ for carrier phase measurements such that it leads to known virtual integer ambiguity corresponding to each gNB-*i*.

The network node (e.g., LMF) may configure and activate (914) gNB-specific resources using shared and/or dedicated control channels, and is asked to use these resources.

The network node (e.g., LMF) may trigger and request (915) to initiate the carrier phase measurements on the network configured resources.

The UE and/or gNBs and/or LMF may perform (916) the phase measurement and positioning procedures.

The LMF may iteratively refine (918) the carrier frequencies $\{f_i^1, f_i^2\}_{\forall i=1,2\ldots,B}$ for phase measurements such that the desired integrity and accuracy can be achieved (917) for UE.

Thus, as illustrated in FIG. 9, the network node (e.g., LMF) may autonomously configure and activates the set of frequencies $\{f_i^1, f_i^2\}_{\forall i=1,2\ldots,B}$ associated with downlink reference signal PRS to be measured in phase measurement configuration and implementations steps for serving and neighbour/assisting gNB(s).

In another example implementation of the method of FIG. 9, the network node (e.g., LMF) may provide the required assisting information to neighbour/assisting gNB(s) 903, e.g., rough UE location, and selected carrier frequencies of serving gNB 902, wherein, neighbour/assisting gNB(s) 903 autonomously determine required frequencies $\{f_j^1, f_j^2\}_{\forall j=2\ldots,B}$ for carrier phase measurements such that it leads to known integer ambiguity corresponding to each gNB, and desired integrity or accuracy is confirmed at network code. In another example, the target UE 901 may be configured (or asked to) to report the serving gNB's configured and activated resources, e.g., frequencies $\{f_1^1, f_1^2\}$ for carrier phase measurements, etc, to the network node (e.g., LMF), wherein, neighbour/assisting gNB(s) 903 autonomously determine required frequencies $\{f_j^1, f_j^2\}_{\forall j=2\ldots,B}$ for carrier phase measurements such that it leads to known integer ambiguity corresponding to each gNB, and desired integrity or accuracy is confirmed at network code. Alternatively, the required resources, e.g., frequencies $\{f_i^1, f_i^2\}_{\forall i=1,2\ldots,B}$, for the high accuracy carrier phase measurements and/or desired integrity and/or accuracy may be configured and activated via any combinations of above defined approaches and/or any related extensions.

Furthermore, after one or more measurement report(s) are obtained, the UE position may be calculated as network-based and/or UE-based using assisting information.

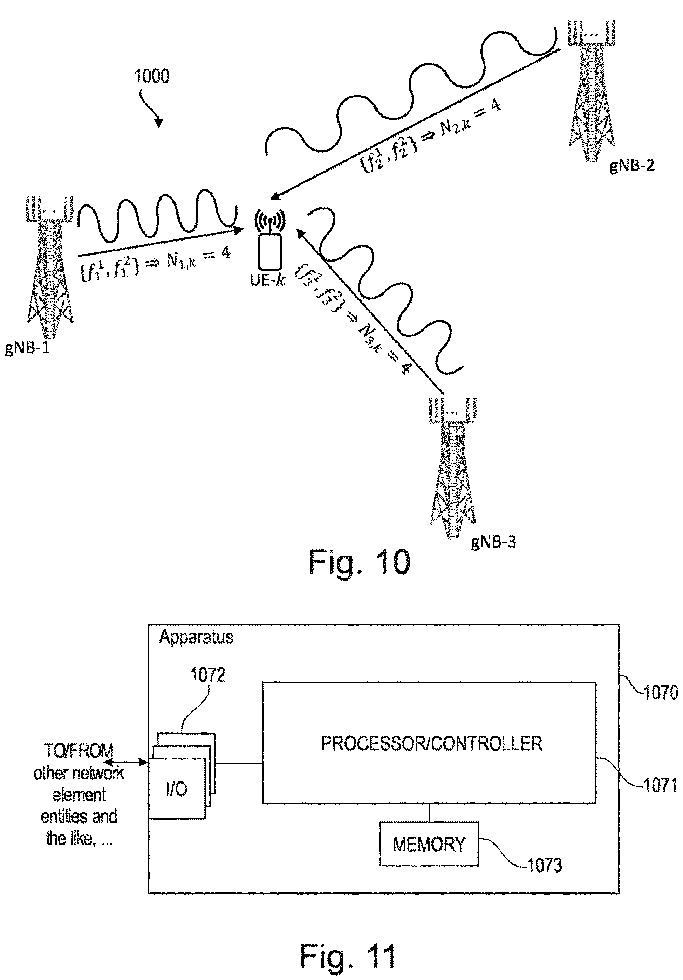

FIG. 10 is a diagram of a communication system 1000 in accordance with an example of the present subject matter. The communication system 1000 comprises three gNBs gNB-1, gNB-2 and gNB-3 and a UE. FIG. 10 illustrates the outcome of the definition step and the control step in accordance with an example of the present subject matter. The definition step defines three groups of two reference signals to be transmitted by the three gNBs respectively. As indicated in FIG. 10, each group of reference signals has its own pair of carrier frequencies. FIG. 10 further indicates that the virtual based processing may enable to have a virtual reference signal (the represent the two reference signals) between each gNB and the UE. FIG. 10 further indicates that the definition step provides for each group of reference signals the same virtual number of wavelengths e.g., which is equal to 4.

In order to enable the quick and reliable search for unknown integer ambiguity, the network node exploits the available coarse estimate of the target UE to cleverly determine frequencies for phase measurement. As an example case, referring to equation (1), each neighbour/assisting gNB is proactively configured and activated with the required frequencies $\{f_j^1, f_j^2\}_{\forall j=2\ldots,B}$ for carrier phase measurements such that it leads to *known (or multiple* of) virtual integer ambiguity estimate with reference to the serving gNB, i.e., $N_{j,k} = a_j N_{1,k}$ where $\alpha_j \in R^+, \forall_j = 2 \ldots, B$. Note that, there can be the same $\{N_k\}$ and/known $\{\alpha_j N_k\}$ integer ambiguity corresponding to each gNB-$i$, wherein, the total number of completed phase cycles that the reference carrier signal has travelled between UE and gNB can be easily determined by exploiting the rough UE's position together with the fixed and known positions of gNB(s). Thus, from the above phase observable equation (1), the unknown would be UE coordinates (we assume a differential method with the help of PRU, or the RTT carrier phase measurements can be employed for the cancellation of the unknown initial phase offsets). Hence, there may be significantly lower computational complexity and latency benefits, etc.

In **FIG. 11,** a block circuit diagram illustrating a configuration of an apparatus 1070 is shown, which is configured to implement at least part of the present subject matter. It is to be noted that the apparatus 1070 shown in FIG. 11 may comprise several further elements or functions besides those described herein below, which are omitted herein for the sake of simplicity as they are not essential for the understanding. Furthermore, the apparatus may be also another device having a similar function, such as a chipset, a chip, a module etc., which can also be part of an apparatus or attached as a separate element to the apparatus 1070, or the like. The apparatus 1070 may comprise a processing function or processor 1071, such as a central processing unit (CPU) or the like, which executes instructions given by programs or the like related to a flow control mechanism. The processor 1071 may comprise one or more processing portions dedicated to specific processing as described below, or the processing may be run in a single processor. Portions for executing such specific processing may be also provided as discrete elements or within one or more further processors or processing portions, such as in one physical processor like a CPU or in several physical entities, for example. Reference sign 1072 denotes transceiver or input/output (I/O) units (interfaces) connected to the processor 1071. The I/O units 1072 may be used for communicating with one or more other network elements, entities, terminals or the like. The I/O units 1072 may be a combined unit comprising communication equipment towards several network elements or may comprise a distributed structure with a plurality of different interfaces for different network elements. Reference sign 1073 denotes a memory usable, for example, for storing data and programs to be executed by the processor 1071 and/or as a working storage of the processor 1071.

The processor 1071 is configured to execute processing related to the above described subject matter. In particular, the apparatus 1070 may be configured to perform the method as described in connection with FIG 3, 4, 5A, 6, 7 or 8.

For example, the processor 1071 is configured for: determining a first estimate of a position of a user equipment comprised in a communication system, the communication system comprising nodes and at least one user equipment, the communication system being configured for performing carrier phase measurements of groups of signals transmitted between the nodes and the user equipment, the communication system being configured to perform the carrier phase measurement of the group of positioning signals as a carrier phase measurement of a single virtual positioning signal representing the group of positioning signals, the virtual positioning signal having a virtual wavelength a virtual number of wavelengths, the apparatus comprising means; using the first estimate of the position of the user equipment for defining wavelengths of the groups of signals such that a virtual number of wavelengths that represents each group of signals can be obtained from the defined wavelengths of the group of signals; controlling the communication system for performing carrier phase measurements using the defined group of signals; determining a second estimate of the position of the user equipment using the carrier phase measurements and the virtual numbers of wavelengths that represent the groups of signals; providing the second estimate of the position of the user equipment.

As will be appreciated by one skilled in the art, aspects of the present invention may be embodied as an apparatus, method, computer program or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon. A computer program comprises the computer executable code or "program instructions".

Any combination of one or more computer readable medium(s) may be utilized. The computer readable medium may be a computer readable storage medium. A 'computer-readable storage medium' as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device.

'Computer memory' or 'memory' is an example of a computer-readable storage medium. Computer memory is any memory which is directly accessible to a processor. 'Computer storage' or 'storage' is a further example of a computer-readable storage medium. Computer storage is any non-volatile computer-readable storage medium. In some embodiments computer storage may also be computer memory or vice versa.

A 'processor' as used herein encompasses an electronic component which is able to execute a program or machine executable instruction or computer executable code. References to the computing device comprising "a processor" should be interpreted as possibly containing more than one processor or processing core. The processor may for instance be a multi-core processor. A processor may also refer to a collection of processors within a single computer system or distributed amongst multiple computer systems. The term computing device should also be interpreted to possibly refer to a collection or network of computing devices each comprising a processor or processors. The computer executable code may be executed by multiple processors that may be within the same computing device or which may even be distributed across multiple computing devices.

Computer executable code may comprise machine executable instructions or a program which causes a processor to perform an aspect of the present invention. Computer executable code for carrying out operations for aspects of the present invention may be written in any combination of one or more programming languages, including an object oriented programming language such as Java, Smalltalk, C++ or the like and conventional procedural programming languages, such as the "C" programming language or similar programming languages and compiled into machine executable instructions. In some instances the computer executable code may be in the form of a high level language or in a pre-compiled form and be used in conjunction with an interpreter which generates the machine executable instructions on the fly.

Generally, the program instructions can be executed on one processor or on several processors. In the case of multiple processors, they can be distributed over several different entities. Each processor could execute a portion of the instructions intended for that entity. Thus, when referring to a system or process involving multiple entities, the computer program or program instructions are understood to be adapted to be executed by a processor associated or related to the respective entity.

**Claims**

1. An apparatus for a communication system, the communication system comprising nodes and at least one user equipment, the communication system being configured for performing carrier phase measurements of groups of signals transmitted between the nodes and the user equipment, the communication system being configured to perform the carrier phase measurement of the group of positioning signals as a carrier phase measurement of a single virtual positioning signal representing the group of positioning signals, the virtual positioning signal having a virtual wavelength and a virtual number of wavelengths, the apparatus comprising means, the means being configured for:

   determining a first estimate of a position of the user equipment;
   using the first estimate of the position of the user equipment for defining wavelengths of the groups of signals such that a virtual number of wavelengths that represents each group of signals can be obtained from the defined wavelengths of the group of signals;
   controlling the communication system for performing carrier phase measurements using the defined groups of signals;
   determining a second estimate of the position of the user equipment using the carrier phase measurements and the virtual numbers of wavelengths that represent the groups of signals;
   providing the second estimate of the position of the user equipment; selecting a node of the nodes; wherein the defining of the wavelengths of the groups of signals is performed such that the virtual number of wavelengths of non-selected nodes is a function of the virtual number of wavelengths of the selected node.

2. The apparatus of any of the preceding claims, the means being configured for determining an accuracy of the second estimate of the position of the user equipment, and in response to determining that the accuracy does not fulfil a position criterion, repeating the definition of the groups of signals, the controlling and the determining of the second estimate, the repetition being performed until the accuracy fulfills the position criterion.

3. The apparatus of claim 1 or 2, the means being configured for determining an accuracy of the second estimate of the position of the user equipment, and in response to determining that the accuracy fulfills the position criterion, providing the second estimate of the position of the user equipment.

4. The apparatus of any of the preceding claims, the selected node being the node that serves the user equipment.

5. The apparatus of any of the preceding claims, wherein the second estimate of the position is obtained using computed distances between the user equipment and the nodes, the means being configured for: providing an accuracy of the second estimate of the position of the user equipment, the accuracy being determined by at least:

   selecting two nodes of the communication system;
   estimating the distance between the user equipment and a first node of the two selected nodes using the computed distance between the user equipment and the second node and a direction from the second node to the user equipment;
   comparing the estimated distance with the computed distance between the user equipment and the first node.

6. The apparatus of any of the preceding claims, the means being configured for: providing an accuracy of the second estimate of the position of the user equipment, the accuracy being determined by at least:

   using the defined signals for determining a third estimate of the position of the user equipment using a technique different from the carrier phase measurements;
   comparing the second estimate with the third estimate.

7. The apparatus of any of the preceding claims, the means being configured for: providing an accuracy of the second estimate of the position of the user equipment, the accuracy being determined by at least: comparing the second estimate of the position with a position of the user equipment estimated from history data of the user equipment, the history data comprising previous measurement instances and mobility profile of the user equipment.

8.   The apparatus of any of the preceding claims, the first estimate of the position of the user equipment being performed using a technique different from the carrier phase measurement.

9.   The apparatus of any of the preceding claims, being comprised in a node of the nodes.

10.   The apparatus of any of the preceding claims, being comprised in a given node of the nodes, the given node serving the user equipment.

11.   The apparatus of any of the preceding claims, the communication system being configured for performing carrier phase measurements such that the carrier phase measurements are performed at:

> the user equipment using the groups of positioning signals received from the nodes; and/or
> at the nodes using the groups of positioning signals received from the user equipment.

12.   The apparatus of any of the preceding claims, the at least one user equipment comprising a reference user equipment having a fixed known position, wherein the communication system is configured for performing carrier phase measurements such that the carrier phase measurements are performed at:

> the user equipment using the positioning signals received from the nodes; and/or
> at the nodes using the positioning signals received from the user equipment;
> and the communication system is provided such that the carrier phase measurements are performed at the reference user equipment using the positioning signals received from the nodes.

13.   The apparatus of any of the preceding claims, the signals comprising at least one of: positioning reference signals (PRSs) or sounding reference signals (SRSs).

14.   The apparatus of any of the preceding claims, the means being configured for:

> defining for the node serving the user equipment wavelengths of the group of reference signals to be transmitted from the serving node to the user equipment; and
> providing to remaining nodes information indicating the defined group of signals thereby causing the remaining nodes to define respective groups of signals.

15.   A method for a communication system, the communication system comprising nodes and at least one user equipment, the communication system being configured for performing carrier phase measurements of groups of signals transmitted between the nodes and the user equipment, the communication system being configured to perform the carrier phase measurement of the group of positioning signals as a carrier phase measurement of a single virtual positioning signal representing the group of positioning signals, the virtual positioning signal having a virtual wavelength and a virtual number of wavelengths, the method comprising:

> determining a first estimate of a position of the user equipment;
> using the first estimate of the position of the user equipment for defining wavelengths of the groups of signals such that a virtual number of wavelengths that represents each group of signals can be obtained from the defined wavelengths of the group of signals;
> controlling the communication system for performing carrier phase measurements using the defined groups of signals;
> determining a second estimate of the position of the user equipment using the carrier phase measurements and the virtual numbers of wavelengths that represent the groups of signals;
> providing the second estimate of the position of the user equipment; selecting a node of the nodes; wherein the defining of the wavelengths of the groups of signals is performed such that the virtual number of wavelengths of non-selected nodes is a function of the virtual number of wavelengths of the selected node.

Fig. 1

Fig. 2

| Determining a first estimate of a position of the user equipment |
| --- |

301

| Using the first estimate of the position of the user equipment for defining wavelengths of the groups of signals such that a virtual number of wavelengths that represents each group of signals can be obtained from the defined wavelengths of the group of signals |
| --- |

303

| Controlling the communication system for performing carrier phase measurements using the defined groups of signals |
| --- |

305

| Determining a second estimate of the position of the user equipment using the carrier phase measurements and the virtual numbers of wavelengths that represent the groups of signals |
| --- |

307

| Providing the second estimate of the position of the user equipment |
| --- |

309

# Fig. 3

Determining a first estimate of a position of the user equipment

401

Using the first estimate of the position of the user equipment for defining wavelengths of the groups of signals such that a virtual number of wavelengths that represents each group of signals can be obtained from the defined wavelengths of the group of signals

403

Controlling the communication system for performing carrier phase measurements using the defined groups of signals

405

determining a second estimate of the position of the user equipment using the carrier phase measurements and the virtual numbers of wavelengths that represent the groups of signals

407

Determining an accuracy estimation of the second estimate of the position of the user equipment

409

Accuracy fulfils position criterion?

411

No

Yes

Providing the second estimate of the position of the user equipment

413

Fig. 4

Selecting two nodes of the communication system

501

Estimating the distance between the user equipment and a first node of the two selected nodes using the computed distance between the user equipment and the second node

503

Comparing the estimated distance with the computed distance between the user equipment and the first node

505

# Fig. 5A

gNB-1

gNB-2

$b$

$\theta_{2k}$

$\theta_{1k}$

$d_{1k}$

$d_{2k}$

UE-$k$

# Fig. 5B

Using the defined positioning signals for determining a third estimate of the position of the user equipment using a technique different from the carrier phase measurements

601

Comparing the second estimate with the third estimate

603

# Fig. 6

Using history data of the user equipment for determining a third estimate of the position of the user equipment , the history data comprising previous measurement instances and mobility profile of the user equipment

701

Comparing the second estimate with the third estimate

703

# Fig. 7

Coarse estimate on UE position
Via initial/available/acquired physical layer
measurements

801

Configure and activate the *required* parameters, i.e.,
carrier frequencies $\left\{f_i^1, f_i^2\right\}_{\forall i=1,2\ldots,B}$ for phase
measurement

803

Obtain the carrier phase measurements at gNB(s)

805

Estimate target UE position

807

Desired integrity or
accuracy ?

809

No

Yes

end

Fig. 8

Fig. 9

EP 4 513 220 A1

1000

$\{f_2^1, f_2^2\} \Rightarrow N_{2,k} = 4$

gNB-2

$\{f_1^1, f_1^2\} \Rightarrow N_{1,k} = 4$

UE-$k$

$\{f_3^1, f_3^2\} \Rightarrow N_{3,k} = 4$

gNB-1

gNB-3

Fig. 10

Apparatus

1072

1070

TO/FROM
other network
element
entities and
the like, ...

I/O

PROCESSOR/CONTROLLER

1071

MEMORY

1073

Fig. 11

Europäisches
Patentamt

European
Patent Office

Office européen
des brevets

# EUROPEAN SEARCH REPORT

**Application Number**

EP 24 19 2557

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/156889 A1 (NOKIA TECHNOLOGIES OY [FI]) 28 July 2022 (2022-07-28)<br>* page 14, lines 13-15; figures 2,3a,3b,9 *<br>* page 25, paragraphs 1-23,28,29 *<br>* page 116, line 17 - page 18, line 8 *<br>* page 24, line 33 - page 25, line 5 *<br>* page 26, lines 9-20 *<br>* page 15, lines 13-28 * | 1-15 | INV.<br>G01S5/02<br>G01S5/10<br>G01S5/14 |

-----

**TECHNICAL FIELDS SEARCHED (IPC)**

G01S

The present search report has been drawn up for all claims

| Place of search | Date of completion of the search | Examiner |
|---|---|---|
| The Hague | 14 January 2025 | Fagundes-Peters, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 2557

This annex lists the patent family members relating to the patent documents cited in the above-mentioned European search report.
The members are as contained in the European Patent Office EDP file on
The European Patent Office is in no way liable for these particulars which are merely given for the purpose of information.

14-01-2025

| Patent document cited in search report | Publication date | Patent family member(s) | | Publication date |
|---|---|---|---|---|
| WO 2022156889 A1 | 28-07-2022 | EP | 4281796 A1 | 29-11-2023 |
| | | US | 2024039611 A1 | 01-02-2024 |
| | | WO | 2022156889 A1 | 28-07-2022 |

EPO FORM P0459

For more details about this annex : see Official Journal of the European Patent Office, No. 12/82